Europäisches Patentamt

European Patent Office

Office européen des brevets

(11) Veröffentlichungsnummer: **0 270 834**
**B1**

(12) **EUROPÄISCHE PATENTSCHRIFT**

(45) Veröffentlichungstag der Patentschrift:
23.08.89

(51) Int. Cl.⁴: **B60S 1/36**

(21) Anmeldenummer: 87116209.5

(22) Anmeldetag: 04.11.87

(54) Vorrichtung, insbesondere Hubwischeranlage für Kraftfahrzeuge.

(30) Priorität: 07.11.86 DE 3638073

(43) Veröffentlichungstag der Anmeldung:
15.06.88 Patentblatt 88/24

(45) Bekanntmachung des Hinweises auf die Patenterteilung:
23.08.89 Patentblatt 89/34

(84) Benannte Vertragsstaaten:
ES FR GB IT

(56) Entgegenhaltungen:
EP-A- 0 169 363
DE-A- 3 409 256
DE-A- 3 443 886

(73) Patentinhaber: SWF Auto-Electric GmbH, Stuttgarter Strasse 119 Postfach 135,
D-7120 Bietigheim-Bissingen(DE)

(72) Erfinder: Egner-Walter, Bruno, Käferflugstrasse 43,
D-7100 Heilbronn(DE)
Erfinder: Schmid, Eckhardt, Heilbronner Strasse 62,
D-7129 Brackenheim(DE)
Erfinder: Scholl, Wolfgang, Gartenstrasse 16,
D-7121 Gemmrigheim(DE)

ACTORUM AG

**Beschreibung**

Die Erfindung bezieht sich auf eine Vorrichtung, insbesondere eine Hubwischeranlage für Kraftfahrzeuge, gemäß den Merkmalen des Oberbegriffs des Anspruchs 1.

Bei vielen Anwendungsfällen einer solchen Vorrichtung muß der Kolben so geführt werden, daß er sich während seiner Verstellbewegung nicht um seine Längsachse drehen kann. Dies gilt auch für sogenannte Hubwischeranlagen, bei denen während der Pendelbewegung der an dem Kolben fixierte Scheibenwischer in radialer Richtung ein- und ausgefahren wird, so daß auch die Eckbereiche einer Windschutzscheibe von dem Wischblatt des Scheibenwischers erreicht werden.

Aus der DE-A 34 09 256 ist eine Hubwischeranlage bekannt, bei der am Kolben verdrehfest ein Schlitten fixiert ist, der in seinen diametral gegenüberliegenden Endbereichen Führungsnuten aufweist, in die gehäusefeste Führungselemente in Form von flachen Schienen eingreifen. Die Tiefe dieser Nuten im Führungsschlitten ist größer als der passend in diese Nuten hineinragende Abschnitt der Führungsschienen. Wenn die Führungsschienen in der durch sie definierten Ebene nicht exakt parallel zueinander und parallel zur Verstellrichtung des Kolbens ausgerichtet sind, hat dies keinen Einfluß auf die Leichtgängigkeit des Kolbens, weil die Führungsschienen mehr oder weniger in die Nuten am Führungsschlitten eintauchen können. Bei einer starren Verbindung zwischen Schlitten und Kolben wäre bei einer windschiefen Anordnung der Führungsschienen aber eine Schwergängigkeit nicht ausgeschlossen. Um diesen Nachteil zu vermeiden, ist daher bei dieser bekannten Ausführung der Schlitten in einer Richtung beweglich am Kolben gehalten, so daß diese schädlichen Toleranzen in der Lage der Führungsschienen aufgefangen werden können. Dazu ist der Kolben an seinem Ende als Zweiflach ausgebildet, der in einer etwas größeren Aussparung im Schlitten steckt. Bei dieser Ausführung sind also Form- und Lagefehler der Führungselemente und des Schlittens, die in der Praxis unvermeidbar sind, ausgeglichen, so daß der Kolben leichtgängig verstellt werden kann. Dies wirkt sich auch günstig auf die Lebensdauer einer solchen Vorrichtung aus.

Allerdings bereitet die Herstellung eines derart ausgebildeten Verdrehschutzes für den Kolben erhebliche Schwierigkeiten und Kosten. Die Führungselemente müssen nämlich in besonderer Weise bearbeitet werden, damit sie die notwendige glatte Oberfläche aufweisen. Dies ist bei flachen Führungselementen in Form von Schienen kostspielig. Auch die Herstellung der spielbehafteten Verbindung zwischen Kolben und Schlitten ist wegen des als Zweiflach ausgebildeten Endes des Kolbens mit erheblichen Kosten verbunden. Der Schlitten hat eine verhältnismäßig komplizierte Raumform und verursacht daher auch nicht unerhebliche Kosten bei der Herstellung. Außerdem sind zusätzliche Elemente zur Fixierung des Schlittens in Verstellrichtung des Kolbens notwendig.

Der vorliegenden Erfindung liegt also die Aufgabe zugrunde, eine Vorrichtung der eingangs erwähnten Art hinsichtlich des Verdrehschutzes für den Kolben zu vereinfachen und hinsichtlich der Führungseigenschaften zu verbessern. Natürlich dürfen dabei die Laufeigenschaften und die Lebensdauer auch bei Form- und Lagefehlern der Führungselemente und des Schlittens gegenüber der bekannten Ausführung nicht verschlechtert werden.

Diese Aufgabe wird erfindungsgemäß mit den kennzeichnenden Merkmalen des Anspruchs 1 gelöst.

Die Erfindung beruht dabei wesentlich auf der Erkenntnis, daß man die mögliche Führungsfläche am Führungselement im Vergleich zur möglichen Führungsfläche an der Führungsgabel verkleinern kann, ohne daß dadurch die Lebensdauer der Führung verschlechtert wird, wenn man dafür sorgt, daß sich der Abstand der wirksamen Führungsflächen von der Verstellrichtung bzw. Achsrichtung des Kolbens während der Verstellbewegung ändert. Durch die laufende Verlagerung der wirksamen Führungsflächen während der Verstellbewegung quer zur Verstellrichtung wird nämlich gewissermaßen die beanspruchte Fläche vergrößert, so daß mit einer längeren Spielfreiheit gerechnet werden kann. Damit kann man nun gemäß einer besonders bevorzugten Weiterbildung der Erfindung als Führungselement eine Stange mit kreisrundem Querschnitt verwenden, bei der die mögliche Führungsfläche im Extremfall auf einer Linienberührung reduziert ist. Damit werden beträchtliche Kosten eingespart, denn die Herstellung und Bearbeitung einer solchen Führungsstange mit kreisrundem Querschnitt ist wesentlich einfacher als die Herstellung der bisher verwendeten Führungsschienen.

Zur Realisierung der Abstandsänderung zwischen der Führungsstange und der Achse der Kolbens, könnte man beispielsweise eine geringfügig gewölbte Stange verwenden. Sehr einfach läßt sich diese Abstandsveränderung jedoch auch bei einer geraden zylindrischen Stange realisieren, wenn man die Stange derart im Führungsgehäuse anordnet, daß ihre Achse mit der Kolbenachse einen Winkel ungleich 0° einschließt.

Die Erfindung und deren vorteilhafte Ausgestaltungen werden nachstehend anhand der in der Zeichnung dargestellten Ausführungsbeispiele näher erläutert. Es zeigen:

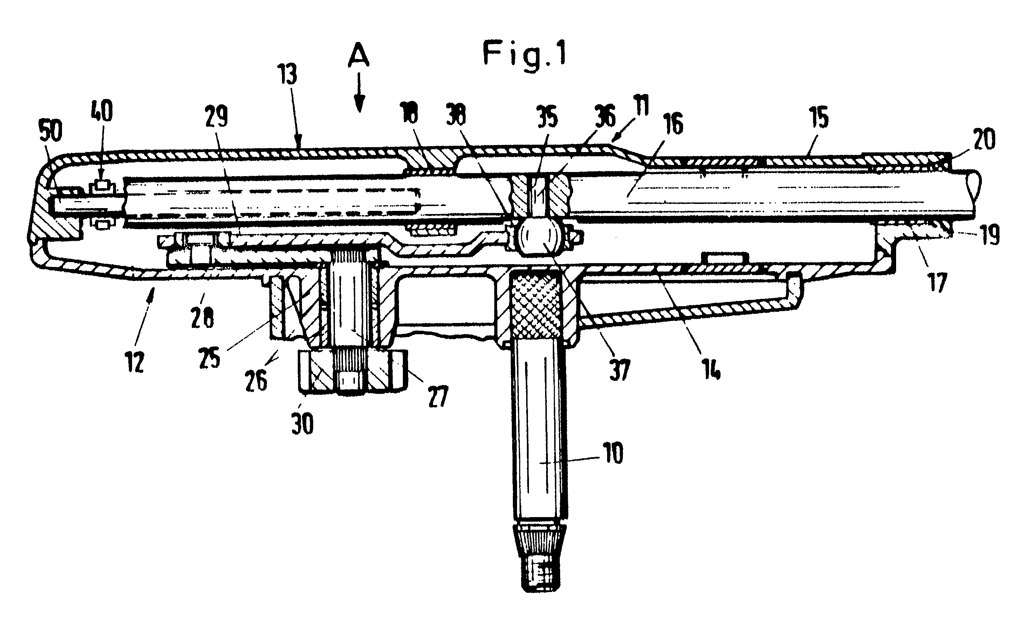

Fig. 1 einen Längsschnitt durch ein über eine Wischerwelle pendelnd antreibbares Gehäuse einer Hubwischeranlage mit einem im Gehäuse gelagerten längsverschiebbaren Kolben, an dem ein Schlitten fixiert ist,

Fig. 2 eine Teilansicht in Pfeilrichtung A auf die Vorrichtung,

Fig. 3 einen Schnitt entlang der Schnittlinie III-III und

Fig. 4 einen Schnitt entlang der Schnittlinie IV-IV in Fig. 2.

Bei der gezeigten Wischeranlage ist auf einer Wischerwelle 10 ein Gehäuse 11 verdrehsicher befestigt, das Teil eines Wischarms ist und sich aus zwei Bauteilen, nämlich einer Grundplatte 12 und einem Oberteil 13 zusammensetzt. An der Wischerwelle 10 befestigt ist die Grundplatte 12. Das Gehäuse 11 hat eine flache Form mit einem Boden 14 an der Grundplatte 12 und einer Decke 15 am Oberteil 13. Innerhalb des Gehäuses 11 ist ein zylindrischer Kolben 16 in zwei Lagern 17 und 18 so gelagert, daß er in einer zur Drehachse der Wischerwelle 10 radialen Richtung verschoben werden kann. Die Sitze für die Lager 17 und 18 befinden sich im Oberteil 13 des Gehäuses 11. Der Kolben 16 ragt aus dem Gehäuse 11 an der Vorderseite 19 heraus. Das vordere Lager 17 schließt sich unmittelbar innen an die Vorderseite 19 des Gehäuses 11 an. Vor ihm befindet sich lediglich eine Dichtung 20, die verhindern soll, daß zwischen dem Gehäuse 11 und dem Kolben 16 Schmutz in das Innere des Gehäuses eindringt. Das hintere Lager 18 befindet sich in einem Abstand vom Lager 17, der etwas größer ist als der für den Kolben vorgesehene Hub.

Von der Vorderseite 19 des Gehäuses 11 aus betrachtet hinter der Wischerwelle 10 und unterhalb des Kolbens 16 weist die Grundplatte 12 eine Hülse 25 auf, die sich im wesentlichen vom Innern des Gehäuses 11 weg nach außen erstreckt. In die Hülse 25 sind mit Paßsitz zwei Lagerbuchsen 26 eingesetzt, die eine Welle 27 aufnehmen. Diese ragt auf der einen Seite in das Innere des Gehäuses 11 hinein und steht auf der anderen Seite über die Hülse 25 der Grundplatte 12 vor. Von den gerändelten, vorstehenden Teilen trägt der eine innerhalb des Gehäuses 11 verdrehsicher eine Kurbel 28, an deren freies Ende drehbar eine Koppelstange 29 angelenkt ist. Auf dem anderen gerändelten Abschnitt der Welle 27 ist verdrehsicher ein Zahnrad 30 befestigt. Während des Betriebes der Wischeranlage wird dieses Zahnrad 30 angetrieben.

Zwischen den beiden Lagern 17 und 18 besitzt der Kolben 16 einer Bohrung 35, in die ein Kugelbolzen 36 eingepreßt ist. Die Bohrung 35 und damit auch der Kugelbolzen 36 verlaufen im wesentlichen senkrecht zum Boden 14 der Grundplatte 12 und zur Decke 15 des Oberteils 13. Auf der dem Boden 14 zugeordneten Seite des Kolbens 16 steht der Kugelbolzen 36 mit dem Kugelsegment 37 über den Kolben 16 vor. In das eine Ende der zwischen der Kurbel 28 und dem Kolben 16 liegenden Koppelstange 29 ist ein Kugelschalensegment 38 aus Kunststoff eingeknöpft, in das das Kugelsegment 37 des Kugelbolzens 36 eingedrückt ist. Während des Betriebs wird also die Drehbewegung des Zahnrads 30 über den Kurbeltrieb 28,29 in eine hin- und hergehende Bewegung des Kolbens 16 umgewandelt.

Nach der Montage am Kraftfahrzeug sind an dem Kolben 16 weitere Teile eines Wischarms befestigt, die ein Wischblatt tragen. Da dieses während des Betriebs der Anlage seiner Bewegung über die Scheibe eines Kraftfahrzeuges hinweg einen Widerstand entgegensetzt, wirkt dann auf den Kolben 16 ein Moment, das den Kolben um eine Achse in seiner Längsrichtung verdrehen will. Auch der seitliche Angriff der Koppelstange 29 am Kolben 16 erzeugt auf diesen wirkende Torsionskräfte. Um das auf den Kolben 16 wirkende Drehmoment aufzufangen, ist am hinteren Ende des Kolbens 16 verdrehsicher mit diesem ein Schlitten 40 gehalten, der vom Kolben radial absteht und an einem gehäusefesten Führungselement 50 längsgeführt ist.

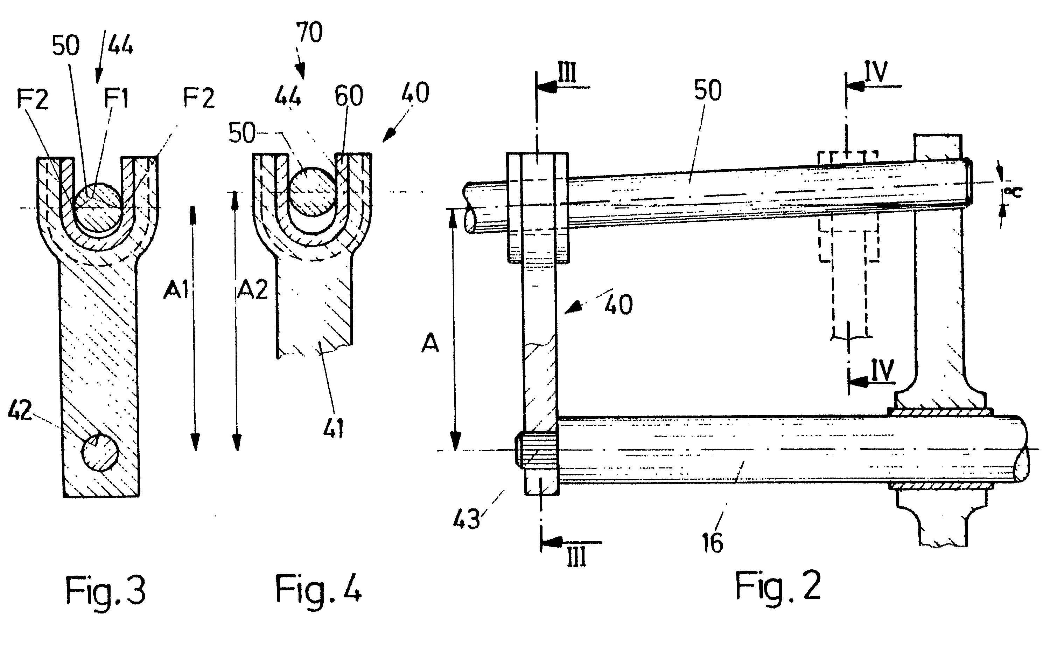

Im folgenden wird anhand der Figuren 2 und 3 der konkrete Aufbau des Verdrehschutzes für den Kolben 16 beschrieben. Der Auslegerarm 40 besteht aus einem Metallblech 41 mit einer Bohrung 42, in die der gerändelte Endabschnitt 43 des Kolbens 16 eingepreßt ist. Damit ist also ohne jedes zusätzliche Teil eine formstabile Verbindung zwischen dem Auslegerarm 40 und dem Kolben 16 hergestellt. Der Auslegerarm 40 erstreckt sich im wesentlichen senkrecht oder radial zum Kolben 16, wie Fig. 2 zeigt. An seinem Endbereich hat dieser Schlitten 40 eine U-förmige, randoffene Aussparung 44, in die auf an sich bekannte Weise eine Kunststoffauskleidung 60 eingespritzt ist.

Aus Fig. 3 und Fig. 4 erkennt man deutlich, daß dieser Auslegerarm 40 an seinem Ende eine Führungsgabel 70 bildet, welche das Fürungselement 50 umgreift. Als Führungselement wird eine Führungsstange mit einem kreisrunden Querschnitt verwendet, die im Abstand A vom Kolben 16 gehäusefest angeordnet ist. Diametral gegenüberliegende Führungsflächen F1 an der Führungsstange 50 liegen dabei an entsprechenden Führungsflächen F2 an der Führungsgabel 70 bzw. deren Auskleidung 60 an. Die Führungsflächen F1 an der Führungsstange sind außerordentlich klein, denn theoretisch handelt es sich ja um eine Linienberührung zwischen dieser kreisrunden Führungsstange 50 und der Führungsgabel 70. An dieser Stelle tritt also eine große Flächenpressung an der Kunststoffauskleidung 60 der Führungsgabel 70 auf, die zu einem raschen Verschleiß führen könnte, wenn man nicht durch die erfindungsgemäßen Maßnahmen diese Beanspruchung auf eine größere Fläche verteilt. Dies wird nun dadurch erreicht, daß sich der Abstand A zwischen diesen wirksamen Führungsflächen und der Achse des Kolbens 16 während der Verstellbewegung ändert. Dies wird auf einfache Weise dadurch erreicht, daß man diese Führungsstange 50 unter einem Winkel α schräg zur Achse des Kolbens 16 anordnet. Dann ändert sich nämlich der Abstand zwischen den Führungsflächen während der Verstellbewegung von dem Wert A1 in den Wert A2. Die kleine Führungsfläche F1 bzw. theoretisch eine Mantellinie der Führungsstange wird also während der Verstellbewegung kontinuierlich quer zur Verstellbewegung verlagert, was zur Folge hat, daß die wirksame Führungsfläche F2 an der Kunststoffauskleidung 60 der Führungsgabel 70 vergrößert und damit deren Beanspruchung günstiger verteilt wird.

Bei einer solchen Ausführung wird man die Führungsstange aus einem verhältnismäßig harten Material herstellen, das keinem wesentlichen Verschleiß unterliegt. Dagegen kann man die größeren Führungsflächen F2 an der Führungsgabel 70 aus einem weicheren Material mit den entsprechenden Gleiteigenschaften herstellen.

Insgesamt ist damit mit einfachsten Maßnahmen ein wirksamer Verdrehschutz geschaffen, der sich durch eine lange Lebensdauer auszeichnet.

**Patentansprüche**

1. Vorrichtung, insbesondere Hubwischeranlage für Kraftfahrzeuge, mit einem Kolben (16), der in einem Gehäuse (11) längs seiner Achse verschiebbar geführt ist und mit einem drehfest an diesem Kolben (16) fixierten Auslegerarm (40), der radial vom Kolben (16) absteht und mit einer Führungsgabel (70) ein im Abstand vom Kolbengehäuse (11) fest angeordnetes Führungselement (50) umgreift, wobei Führungsflächen F1, F2) am Führungselement (50) und der Führungsgabel (70) während der Verstellbewegung des Kolbens (16) aneinander entlanggleiten, dadurch gekennzeichnet, daß die mögliche Führungsfläche (F1) am Führungselement (50) kleiner ist als an der Führungsgabel (70) und daß sich der Abstand (A) zwischen den wirksamen Führungsflächen (F1,F2) und der Achse des Kolbens (16) während der Verstellbewegung ändert.

2. Vorrichtung nach Anspruch 1, dadurch gekennzeichnet, daß das Führungselement (50) eine Stange mit kreisrundem Querschnitt ist.

3. Vorrichtung nach Anspruch 1 oder 2, dadurch gekennzeichnet, daß die Achse der geraden Stange (50) mit der Achse des Kolbens (16) einen Winkel (α) einschließt.

4. Vorrichtung nach einem der vorhergehenden Ansprüche, dadurch gekennzeichnet, daß die an der Stange (50) anliegenden Führungsflächen (F2) an der Führungsgabel (70) aus einem gegenüber dem Material der Stange (50) weicheren Material hergestellt sind.

**Claims**

1. A device, especially reciprocating stroke system for motor vehicles, comprising a piston (16) which in a housing (11) is movably guided along its axis, and comprising a projecting arm (40) fixed on said piston (16) and protected against twisting, which projecting arm radially projects from the piston (16) and encloses a guiding element (30) fixed at distance of the piston housing (11), whereby guiding areas (F1, F2) of the guiding element (50) and of the guiding fork (70) are gliding along each other during the motion of the piston (16), characterized in that the possible guiding area (F1) on the guiding element (50) is smaller (50) than on the guiding fork (70) and that the distance (A) between the effective guiding areas (F1, F2) and the axis of the piston (16) changes during the motion.

2. A device according to claim 1, characterized in that the guiding element (50) is a rod with circular cross-section.

3. A device according to claim 1 or 2, characterized in that the axis of the straight rod (50) and the axis of the piston (16) enclose an angle (α).

4. A device according to one of the preceding claims, characterized in that the guiding areas (F2) of the guiding fork (70) touching the rod (50) are made of a softer material than the rod (50).

**Revendications**

1. Dispositif, en particulier un système d'essuie-glace relevable pour véhicules à moteur, comprenant un piston (16), qui est guidé coulissant à l'intérieur d'un boîtier (11) le long de son axe, et un bras cantilever (40) fixé résistant à la torsion sur ce piston (16), qui s'écarte du piston (16) dans le sens radial et, avec une fourche de guidage (70), entoure un élément de guidage (50) agencé fixe à distance du boîtier du piston (10), des faces de guidage (F1, F2) glissant l'une contre l'autre sur l'élément de guidage (50) et la fourche de guidage (70) pendant le mouvement de déplacement du piston (16), caractérisé en ce que la face de guidage (F1) possible sur l'élément de guidage (50) est plus petite que sur la fourche de guidage (70) et en ce que la distance entre les faces de guidage efficaces (F1, F2) et l'axe du piston (16) varie pendant le mouvement de déplacement.

2. Dispositif selon la revendication 1, caractérisé en ce que l'élément de guidage (50) est une tige à section circulaire.

3. Dispositif selon la revendication 1 ou 2, caractérisé en ce que l'axe de la tige droite (50) forme avec l'axe du piston (16) un angle (α).

4. Dispositif selon l'une quelconque des revendications précédentes, caractérisé en ce que les faces de guidage (F2) adjacentes à la tige (50) sur la fourche de guidage (70) sont fabriquées en une matière souple par rapport à la matière de la tige (50).

Fig.1

F2    50    44    F1    F2

A1

42

Fig. 3

70    44    60    40

50

A2

41

Fig. 4

III    50    IV

40

A    A

43    16

III    IV

Fig. 2

EP 0 270 834 B1